# EUROPÄISCHE PATENTSCHRIFT

(11) **EP 0 491 289 B1**
(45) Veröffentlichungstag und Bekanntmachung des Hinweises auf die Patenterteilung: **03.04.1996**
(21) Anmeldenummer: 91121368.4
(22) Anmeldetag: 12.12.1991
(51) Int. Cl.: G02B 21/00

(54) **Doppelkonfokales Rastermikroskop**
Double-confocal scanning microscope
Microscope double-confocal à balayage

(30) Priorität: 18.12.1990 DE 4040441
(43) Veröffentlichungstag der Anmeldung: 24.06.1992
(73) Patentinhaber: Hell, Stefan Dr., D-67071 Ludwigshafen (DE)
(72) Erfinder: Hell, Stefan Dr., D-67071 Ludwigshafen (DE)
(74) Vertreter: Weiss, Ursula, Dr.

(56) Entgegenhaltungen:
- DE-A- 3 918 412
- OPTICA ACTA Bd. 27, Nr. 5, 1980, LONDON GB Seiten 611 - 624; SHEPPARD ET AL.:'MULTIPLE TRAVERSING OF THE OBJECT IN THE SCANNING MICROSCOPE'
- OPTIK. Bd. 73, Nr. 1, 1986, STUTTGART DE Seiten 30 - 33; STELZER ET AL.: 'A SETUP FOR A CONFOCAL SCANNING LASER INTERFERENCE MICROSCOPE'
- APPLIED PHYSICS LETTERS. Bd. 55, Nr. 17, 23. Oktober 1989, NEW YORK US Seiten 1707-1709; JOHNSON ET AL::'IMAGE FORMATION IN A SUPERRESOLUTION PHASE CONJUGATE SCANNING MICROSCOPE'
- PATENT ABSTRACTS OF JAPAN vol. 11, no. 32 (P-541)30. Januar 1987 & JP-A-61 202 102
- JOURNAL OF PHYSICS E. SCIENTIFIC INSTRUMENTS. Bd. 22, Nr. 8, August 1989,ISHING, BRISTOL GB Seiten 532 - 547; WILSON: 'TECHNIQUES OF OPTICAL SCANNING MICROSCOPY'

## Beschreibung

Die Erfindung betrifft ein Rastermikroskop mit mindestens einer punktförmigen Lichtquelle, mindestens einem Lichtdetektor und mindestens zwei Objektiven, wobei sich auf verschiedenen Seiten der Objektebene mindestens ein Objektiv befindet, das gegen mindestens ein Objektiv, das sich auf der anderen Seite der Objektebene befindet, gerichtet ist und mit diesem einen gemeinsamen Fokus hat.

Aus der DE-OS 3918412 ist ein Rastermikroskop für Durch- und Auflicht bekannt, das, in Lichtrichtung gesehen, vor und hinter einer Strahlscanningeinrichtung je einen polarisationsoptischen Strahlenteiler besitzt, wobei der hintere Strahlenteiler in den Strahlengang ein- und ausschaltbar ist. Dieses bekannte Rastermikroskop ist ein mikroskopischer Aufbau, der dazu dient, Proben sowohl im Durchlicht als auch im Auflicht betrachten zu können. Es dient im Gegensatz zu dem erfindungsgemäßen Rastermikroskop nicht zur Verbesserung der Auflsung mittels Interferenz.

Dieses bekannte Rastermikroskop ist nicht dazu geeignet, Interferenz im Fokalbereich der Objektive herzustellen, da der Polarisationsstrahlteiler zu unterschiedlichen Polarisationszuständen im unteren und oberen Strahlengang führt. Licht unterschiedlicher Polarisation ist nicht interferenzfähig.

In der bisherigen Mikroskopentwicklung wurde besonderen Wert auf die Vergrößerung der Apertur der Mikroskopobjektive gelegt. Damit konnte man die Auflösung in XY-Richtung erhöhen. Bei einer Apertur von NA = 0,95 für Trockenobjektive (Aperturwinkel von 71°) scheint zunächst eine technische Grenze erreicht zu sein.

Dies gilt nicht für die Auflösung in Z-Richtung. Für die genaue dreidimensionale Erfassung eines Punktes transparenter oder fluoreszierender Objekte ist aber die Auflösung in Z-Richtung genauso wichtig wie in XY-Richtung.

Die der vorliegenden Erfindung zugrundeliegende Aufgabe besteht darin, ein Rastermikroskop vorzuschlagen, dessen Auflösung möglichst groß ist.

Diese Aufgabe wird erfindungsgemäß dadurch gelöst, daß mindestens eine nichtpolarisierende Strahlteilervorrichtung zur Aufspaltung des beleuchtenden Lichts in kohärente Anteile, die die verschiedenen, gegeneinander gerichteten Objektive beleuchten, und/oder zum Zusammenführen von zueinander kohärenten Lichtstrahlen von den verschiedenen, gegeneinander gerichteten Objektiven vorgesehen ist und so angeordnet ist, daß der Gangunterschied der durch die Strahlteilervorrichtung definierten, von mindestens einer Lichtquelle durch die verschiedene, gegeneinander gerichtete Objektive zu deren gemeinsamen Fokus führenden optischen Wege kleiner ist als die Kohärenzlänge des aus dieser Lichtquelle kommenden Lichts und/oder der Gangunterschied der durch die Strahlteilervorrichtung definierten, von dem gemeinsamen Fokus durch die verschiedenen Objektive zumindestens einem gemeinsamen Detektor führenden optischen Wege kleiner ist als die Kohärenzlänge des vom gemeinsamen Fokus stammenden Lichts, und daß mindestens ein Interferenzveränderungsmittel derart angeordnet ist, daß Licht, das durch mindestens eines der Objektive hindurchgegangen ist, kohärent oder teilkohärent überlagert wird mit Licht, das durch mindestens ein Objektiv hindurchgegangen ist, welches sich auf der anderen Seite der Objektebene befindet, so daß die überlagerten Lichtquellen am Objekt und/oder an mindestens einem Lichtdetektor zumindest zeitweise miteinander interferieren, daß eine gezielte Beeinflussung der Interferenz möglich ist.

Mit den Interferenzveränderungsmitteln ist es möglich, das entstehende Interferenzmuster gezielt zu beeinflussen, so daß das Interferenzmuster nicht von statistischen Zufällen oder von der Anordnung der Mikroskopteile alleine abhängt.

Vorteilhafterweise tritt an mindestens einem abzubildenden Objektpunkt und/oder an mindestens einem Lichtdetektor zumindest zeitweise konstruktive Interferenz auf.

Vorzugsweise sind die zwei Objektive, die auf verschiedenen Seiten der Objektebene angeordnet sind, gegeneinander gerichtet und zur optischen Achse und zueinander zentriert.

Gemäß einer besonders bevorzugten Ausführungsform befindet sich in mindestens einer Ebene, die zur Objektebene optisch konjugiert ist, mindestens eine Blende. Diese Blende ist üblicherweise eine Lochblende. Eine Blende wird insbesondere dann vorgesehen, wenn sich die optisch zur Objektebene konjugierte Ebene vor einem Lichtdetektor befindet, der das durch die Blende gegangene Licht registriert und/oder daß diese Blende als Lichtquelle dient.

Gemäß einer weiteren besonders bevorzugten Ausführungsform ist das Interferenz-veränderungsmittel eine Kompensationsvorrichtung, die an mindestens einem abzubildenden Objektpunkt und/oder an mindestens einem Lichtdetektor eine Überlagerung kohärenter oder teilkohärenter Wellenzüge ermöglicht, die jeweils durch die verschiedenen Objektive ganz oder teilweise getreten sind.

Diese Kompensationsvorrichtung ruft vorzugsweise an mindestens einem abzubildenden Objektpunkt und/oder an mindestens einem Lichtdetektor zumindest zeitweise konstruktive Interferenz der Wellenzüge hervor. Unter einer Kompensationsvorrichtung soll eine Vorrichtung verstanden werden, die dazu dient, den Gangunterschied zwischen Wellenzügen, die durch verschiedene Objektive hindurchtreten oder hindurchgetreten sind, zu verändern.

Vorzugsweise besitzt mindestens eine der Kompensationsvorrichtungen als gangunterschiedveränderndes Element eine zumindest teilweise transparente Platte, die unterschiedliche optische Dicken aufweist und so bewegt wird, daß in einer zeitlichen Abfolge unterschiedliche optisch dicke Teile der Platte in den Strahlengang gebracht werden.

Gemäß einer weiteren besonders bevorzugten Ausführungsform ist mindestens eine der Kompensationsvorrichtungen eine mechanische Translationsvorrichtung, die an mindestens einem optisch wirksamen Teil angebracht ist und den optischen Weg verlängert oder verkürzt. Eine mechanische Translationsvorrichtung ist beispielsweise ein piezoelektrisch oder ein elektromechanisch betriebener Translator. Das optisch wirksame Teil kann insbesondere ein Spiegel, ein Strahl- oder Farbteiler oder ein sonstiges Umlenkelement sein.

In einer anderen Ausführungsform bewirken die Interferenzveränderungsmittel vorzugsweise eine Translationsbewegung der Objektive, so daß die Translationsbewegung eine nicht verschwindende Komponente in Ausbreitungsrichtung der Wellenfront besitzt, wobei sich die Objektive und die Probe zusammen entlang der optischen Achse bewegen. Interferenzveränderungsmittel verschiedener Bauart können in ein und demselben Aufbau vorhanden sein.
Vorteilhafterweise verändern die Interferenzveränderungsmittel die Interferenzmuster schnell oder auch langsam. Insbesondere verändert die Kompensationsvorrichtung den Gangunterschied zwischen den Wellenzügen, die durch das eine Objektiv hindurchgehen oder hindurchgegangen sind und den Wellenzügen, die durch das andere Objektiv hindurchgehen oder hindurchgegangen sind, schnell oder auch langsam. Die Translation der Objektive kann ebenfalls entweder schnell oder auch langsam erfolgen.

Gemäß einer weiteren besonders bevorzugten Ausführungsform wird die Veränderung der Interferenzmuster periodisch durchgeführt, verändert die Kompen-sationsvorrichtung den Gangunterschied zwischen den Wellenzügen, die durch das eine Objektiv hindurchgehen oder hindurchgegangen sind, und den Wellenzügen, die durch das andere Objekt hindurchgehen oder hindurchgegangen sind, periodisch, oder die Objektive führen eine periodische Bewegung durch.

Vorzugsweise ist mindestens ein Interferenzweränderungsmittel mit der Steuer- und/oder Regelelektronik der Rasterung und/oder mit der Bildaufnahmeelektronik in ihrer Funktion rückgekoppelt und/ oder abgestimmt.

Gemäß einer weiteren besonders bevorzugten Ausführungsform wird das Signal mit Hilfe einer Sample- Elektronik, z.B. Lock-In, Boxcar-Integrator o. ä., weiterverarbeitet und der Sample-Takt wird mit Hilfe eines interferometrischen Aufbaus mit mindestens einem Lichtdetektor gewonnen, oder der Sample-Takt ist vom optischen Aufbau unabhängig, oder der Sample-Takt wird von Signalen bezogen, welche die Interferenzveränderungsmittel steuern oder regeln. Zu diesen Steuer- oder Regelsignalen gehören insbesondere die Steuer- oder Regelsignale mechanischer Stellglieder, die an optisch wirksamen Teilen angebracht sind, und die von Kompensationsvorrichtungen.

Als Lichtdetektoren sind Photomultiplier gut geeignet, aber auch TV-Kameras und auch andere Empfänger, die Lichtsignale in elektrische Signale umwandeln.

Weitere besonders bevorzugte Ausführungsformen werden in den weiteren Unteransprüchen beschrieben.
Die Erfindung wird nun anhand der beigefügten Zeichnungen näher erläutert.

Es zeigen:
Figur 1 die schematische Darstellung des Strahlenganges eines Rastermikroskops,
Figur 2 die schematische Darstellung des Strahlenganges einer weiteren Ausführungsform eines Rastermikroskops,
Figur 3 die schematische Darstellung des Strahlenganges einer anderen Ausführungsform eines Rastermikroskops und
Figur 4 die schematische Darstellung des Strahlenganges einer weiteren Ausführungsform eines Rastermikroskops.

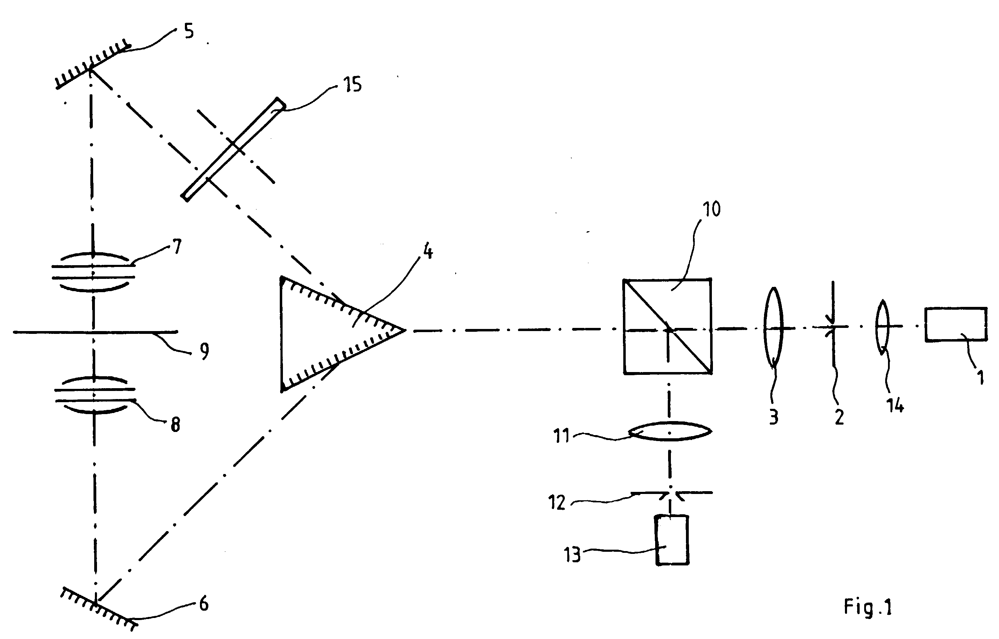

Wie in Figur 1 dargestellt, beleuchtet die Lichtquelle 1 (Laser oder Kurzbogenlampe) die Lochblende 2. Vor dieser Lochblende 2 ist die Linse 14 und hinter dieser Lochhlende 2 die Linse 3 vorzugsweise im Abstand ihrer Brennweiten zur Lochblende angeordnet. Die Wellenfront, die den Strahlteilerwürfel 10 passiert, wird von dem Strahlenteiler 4 in mindestens zwei zueinander kohärente Teilwellenfronten gespalten und abgelenkt. Unter den Begriff Wellenfront soll auch ein ganzer Wellenzug fallen, d. h. auch mehrere Wellenfronten. Die einzelne Wellenfront steht hier, wie im folgenden als ein erklärendes Beispiel für alle Wellenfronten eines Wellenzuges. Der gemäß Figur 1 nach unten abgespaltete Teil der Wellenfront trifft auf den Spiegel 6 und wird von diesem Spiegel 6 auf das Objektiv 8 gelenkt. Der gemäß Figur 1 nach oben aufgespaltete Teil der Wellenfront wird auf den vorzugsweise symmetrisch zu dem Spiegel 6 angeordneten Spiegel 5 gelenkt. Dieser Spiegel 5 lenkt nunmehr seinerseits den auf ihn auftreffenden Teil der Wellenfront auf das Objektiv 7. Die beiden Objektive 7 und 8 des Mikroskops sind gegeneinander gerichtet angeordnet, vorzugsweise zueinander und zur gemeinsamen optischen Achse zentriert. Die beiden Objektive 7 und 8 fokussieren die auf sie auftreffenden Teilwellenfronten in die Objektebene 9. In der Objektebene 9 befindet sich das zu untersuchende Objekt, so daß der gemeinsame Ortspunkt, auf den die Teilwellenfronten fokussiert werden - im allgemeinen der gemeinsame Brennpunkt - der abzubildende Ortspunkt ist. Das von dort emittierte oder reflektierte Licht wird von den Objektiven 7 und 8 erfaßt und über die Spiegel 5 und 6 und den Strahlenteiler 4 dem Strahlteilerwürfel 10 zugeführt. Dieser Strahlteilerwürfel 10 lenkt nun seinerseits das Licht oder einen Teil davon über die vorzugsweise symmetrisch zu der Linse 3 angeordneten Linse 11 in die Lochblende 12. Der Lichtdetektor 13 (Detektor) mißt die Intensität des durch die Lochblende 12 zu ihm gelangenden Lichts.

Im Strahlengang zwischen dem Strahlteiler 4 und dem Spiegel 5 ist die Kompensationsvorrichtung 15 angeordnet, die zur Veränderung des optischen Gangunterschieds zwischen den oberen und unteren Teilwellenfronten der Beleuchlung oder Detektion dient.
Die räumliche Kohärenz der Beleuchtung ist zumindest durch die Lochblende 2 gewährleistet. Darüberhinaus sind die Beleuchtungsteilwellenfront von oben und die Beleuchtungsteilwellenfront von unten interferenzfähig, weil sie aus der gemeinsamen Lichtquelle 1 hervorgehen. Im Fokalbereich interferieren sie zu einer Punktabbildungsfunktion (PSF) H(x,y,z), die räumlich viel stärker begrenzt ist, als die PSF h(x,y,z) in einem herkömmlichen (konfokalen) Mikroskop. Ist der Gangunterschied zwischen den beiden Beleuchtungswellenfronten gleich Null, so ist das Volumen des Hauptmaximums von H(x,y,z) rund 4 mal kleiner als das Volumen des Hauptmaximums von h(x,y,z). Dies bedeutet, daß die wellenoptische Grenze der Auflösung deutlich heruntergesetzt wird. Das erste Intensitätsminimum von H(x,y,z) entlang der optischen Achse liegt etwa eine halbe Wellenlänge, typisch 250 nm, vom absoluten Intensitätsmaximum im Fokuspunkt entfernt. Bei h(x,y,z) hingegen liegt das erste Intensitätsminimum mehr als 1000 nm vom absoluten Intensitätsmaximum entfernt. Analog zur Beleuchtungswellenfront besteht die Detektionswellenfront aus einer Teilwellenfront oben und einer Teilwellenfront unten. Die Teilwellenfronten werden in den Punktdetektor fokussiert, wo sie interferieren und (aus Symmetriegründen) analog zur Beleuchtung eine Abbildung gemäß der Punktabbildungsfunktion H(x,y,z) bewirken.

In dem erfindungsgemäßen doppelkonfokalen Mikroskop ist die quadralische PSF H(x,y,z) für die Auflösung verantwortlich. Die Quadrierung schwächt die Nebenmaxima, die durch die Interferenz der oberen und unteren Wellenfronten entstehen. Die in Richtung der optischen Achse verbesserte Auflösung, verbessert auch die effektive laterale Auflösung, da die Trennung der Z-Koordinaten die Auflösung lateraler Charakteristika ermöglicht, die sonst von den lateralen Charakteristika der Ebenen darüber oder darunter überlagert werden. Da beim Rastermikroskop die Abbildung punktweise erfolgt, ist eine Verbesserung der Auflösung in Richtung der optischen Achse mit einer Verbesserung in lateraler Richtung gleichwertig. Das erfindungsgemäße doppelkonfokale Mikroskop besitzt die höchste Auflösung, die ein Fernfeld-Lichtmikroskop haben kann.

Wird das Rastermikroskop, dessen Strahlengang in Figur 1 dargestellt ist, in der Fluoreszensmikroskopie verwendet, ist der Strahlenteilerwürfel 10 ein Farbstrahlteiler, der das kürzerwellige anregende Licht passieren läßt und das längerwellige zur Seite in den Lichtdetektor 13 ablenkt.

Ferner kann zwischen dem Strahlteilerwürfel 10 und dem Strahlenteiler 4 eine Strahlablenkeinrichtung angeordnet werden. Der Strahlenteiler 4, der in der Darstellung als Spiegel ausgestaltet ist, kann durch andere Strahlenteiler (Würfel usw.) ersetzt werden. Eine Auflösungsverbesserung gegenüber dem herkömmlichen konfokalen Mikroskop wird auch dann erzielt, wenn nur die Interferenz zwischen der oberen und unteren Detektionsteilwellenfront, oder wenn nur die Interferenz zwischen der oberen und unteren Beleuchtungswellenfronl erfolgt.

Im Falle der Fluoreszenzmikroskopie kann in den von dem Strahlenteiler 4 nach oben oder unten abgelenkten Wellenfronten einer der Beleuchlungs- oder Detektionsstrahlengänge mit Hilfe von Farbfiltern ausgeschaltet werden. Dies geht auf Kosten der Auflösung; diese ist aber trotzdem größer als beim konventionellen konfokalen Mikroskop.

Die Kompensationsvorrichtung 15, die beispielsweise eine optische Verzögerungsplatte ist, ist zur optimalen Abstimmung der Interferenz eingebaut, insbesonders so, daß konstruktive Interferenz entsteht.
Sie kann entweder wie dargestellt in dem oberen Teil der Wellenfront oder auch im unteren Teil der Wellenfront eingebaut werden. Sie dient insbesondere dazu, solche Abstimmung der Interferenz zu ermöglichen, deren Verzögerung zeitlich schnell veränderbar ist. Diese können mit der Bildaufnahmeelektronik und/oder der Elektronik zur Steuerung und Regelung der Rasterung rückgekoppelt werden.

Falls Objektrasterung durchgeführt wird, befindet sich das Objekt auf einem - hier nicht eingezeichneten - Scan-Tisch, der die Translation des Objekts in möglichst X, Y und Z-Richtung erlaubt. Falls Strahlrasterung durchgeführt wird, bewegt sich vorzugsweise ein geeigneter Scan-Tisch entlang der optischen Achse (Z-Achse).

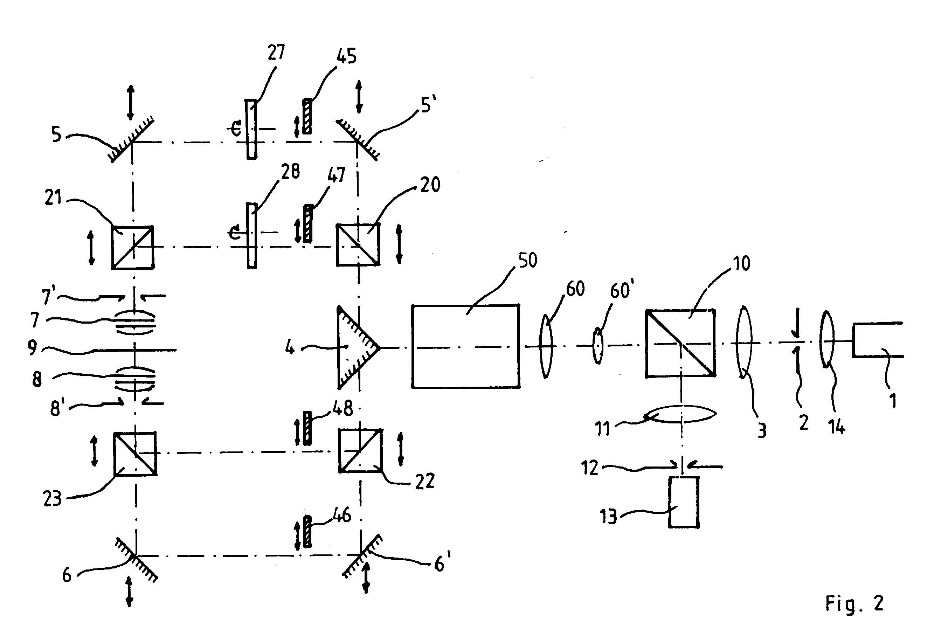

In Figur 2 ist die schematische Darstellung einer weiteren Ausführungsform eines Rastermikroskops dargestellt, die besonders für die Fluoreszenzmikroskopie geeignet ist, wobei die Teile, die gleich zu den in Figur 1 dargestellten Teile sind, mit gleichen Bezugszeichen versehen sind.

Das Licht aus der Lichtquelle 1 gelangt durch den Strahlteiler 10 auf den (geometrischen) Strahlteiler 4, der die Wellenfront in zwei interferenzfähige Anteile spaltet. Ein Teil davon wird über Umlenkelemente in das obere Objektiv 7 des Mikroskops gelenkt (obere Beleuchtungswellenfront), der andere über Umlenkelemente in das untere Objektiv 8 des Mikroskops (untere Beleuchtungswellenfront). Beide Beleuchtungswellenfronten interferieren in der gemeinsamen Objektebene 9. Das von dort ausgehende Licht wird in entsprechendem Anteil von den Objektiven 7 und 8 gesammelt. Das von dem Objektiv 7 kollektierte Licht (obere Detektionswellenfront) und ebenso das von dem Objektiv 8 kollektierte Licht (untere Detektionswellenfront) gelangen über Umlenkelemente auf den Strahlteiler 4, der die bei den Detektionswellenfronten zusammenfügt. Die Detektionswellenfronten gelangen über den Strahlenteiler 10 zu der Lochhlende 12. Die durch die Lochblende 12 gelangte Lichtintensität wird von einem Lichtdetektor 13 gemessen und dient als Signal, das heißt als Charakteristikum des abzubildenden Objektpunktes.

Aufgrund des erfindungsgemäßen Aufbaues findet in mindestens einer der zur Objektebene 9 konjugierten Ebene oder in der Objektebene 9 selbst Interferenz der oberen oder unteren Detektions- oder Beleuchtungswellenfronten statt.
Um die Interferenz zu gewährleisten, um die Interferenz kontrolliert durchführen zu können, bzw. um konstruktive Interferenz zu gewährleisten, ist im Strahlengang zwischen dem Strahlteiler 4 und dem Objektiv 7 die Kompensationsvorrichtung 27 und 28 zur Veränderung des Gangunterschieds zwischen den oberen und unteren Wellenfronten vorgesehen. Es ist auch möglich, daß diese Kompensationsvorrichtung im Strahlengang zwischen dem Strahlteiler 4 und dem Objektiv 8 angeordnet ist. Die Kompensation kann wahlweise auch durch die Bewegung bestimmter Bauteile, insbesondere der im folgenden beschriebenen Umlenkelemente durchgeführt werden. Die Kompensationsvorrichtung bzw. die optischen Wegstrecken sind so dimensioniert, daß auf jeden Fall ein hoher Kohärenzgrad zwischen oberen und unteren Wellenfronten vorhanden ist, so daß die Interferenz auf jeden Fall stattfinden kann.

Wie aus Figur 2 erkenntlich, wird der Strahl bei dieser Ausführungsform wahlweise in seinem Durchmesser mit Hilfe der Bausteine 60 und 60', die zwischen dem Strahlteilerwürfel 10 und dem Strahlteiler 4 angeordnet sind, in seinem Durchmesser vergrößert oder verkleinert. Desweiteren passiert er die Strahlablenkeinheit 50. Wie oben bereits beschrieben, wird die auf den Strahlteiler 4 auffallende Wellenfront in eine obere und eine untere Beleuchtungswellenfront geteilt. Der Strahlteilerwürfel 10 ist im Falle der Fluoreszenzmikroskopie gemäß Figur 2 ein Farbteilerwürfel, der das zu detektierende Licht in den Lichtdetektor lenkt und das beleuchtende dem Strahlteiler zuleitet. Zwischen dem Strahlteiler 4 und dem Objektiv 7 und/oder dem Strahlteiler 4 und dem Mikroskopobjektiv 8 ist mindestens ein Farbteiler angebracht. Gemäß Figur 2 sind es die beiden Farbteiler 20 und 21, die die Detektionswellenfront von der Beleuchtungswellenfront trennen. Diese passieren getrennt je eine Kompensationsvorrichtung 27 bzw. 28, so daß die Beleuchtungs- und die Detektionswellenfront getrennt in ihrer Phase und/oder Amplitude verändert werden können.

Für den Fall, daß das detektierte Licht eine längere Wellenlänge besitzt und die Farbteiler 20 und 21 das längerwellige Licht reflektieren und das kürzerwellige beleuchtende Licht durchlassen, dient die Kompensationsvorrichtung 27 der Kompensation der Beleuchtungswellenfront und die Kompensationsvorrichtung 28 der Detektionswellenfront. Unter Kompensation versteht man die Veränderung des Gangunterschieds zwischen den Teilwellenfronten und/oder Veränderung der Phase einer Wellenfront.

Analog zu den eben beschriebenen Farbteiler 20 und 21 sind im unteren Strahlengang die Farbteiler 22 und 23 angeordnet. Diese Farbteiler 22 und 23 werden analog zum oberen Strahlengang aufgebaut. Sie sind vorzugsweise aus dem Strahlengang herausnehmbar und/oder durch Farbteiler mit anderen physikalischen Eigenschaften ersetzbar. Weitere Farbteiler oder Farbteilerpaare können zwischen dem Strahlteiler 4 und dem Objektiv 7 analog zu den Farbteilern 20 und 21 installiert werden, wie auch zwischen dem Strahlteiler 4 und dem Objektiv 8, z. B. bei Mehrfachfluoreszenz, um auch Wellenfronten mit einer weiteren Wellenlänge gezielt im Gangunterschied der Teilwellenfronten verändern zu können.

Über das Umlenkelement 5' gelangt die obere Beleuchtungswellenfront auf die Kompensationsvorrichtung 27, die die optische Weglänge oder die Phase der Wellenfront verändert. Über das Umlenkelement 5 gelangt die obere Beleuchtungswellenfront in das Objektiv 7, welches das Licht in die Objektebene 9 fokussiert. Über das Umlenkelement 6' und das Umlenkelement 6 gelangt die untere Beleuchtungswellenfront in das Objektiv 8, welches das Licht ebenso in den gemeinsamen Brennpunkt fokussiert. Im Brennpunkt können die beiden Beleuchtungswellenfronten miteinander interferieren.

Das Objekt befindet sich vorzugsweise auf einer Tischvorrichtung, welche eine Bewegung des Objekts in Z-Richtung, vorzugsweise in allen drei Raumrichtungen erlaubt.

Das vom Objektpunkt ausgehende Licht gelangt in die Objektive 7 und 8, welche die obere bzw. untere Detektionswellenfront ausbilden. Unter dem Begriff "Wellenfront" sollen andere Wellenfronten des gleichen Wellenzuges im allgemeinen miteinbegriffen sein. Im Falle des Fluoreszenzbetriebs gelangt die obere Detektionswellenfront über den Farbteiler 21, die Kompensationsvorrichtung 28 und den Farbteiler 20 auf den Strahlteiler 4, ebenso wie die untere Detektionswellenfront über die Farbteiler 23 und 22 auf den Strahlteiler 4 gelangt. In einem Nicht-Fluoreszenzbetrieb passieren die Detektionswellenfronten die Farbteiler und werden über die Umlenkelemente 5 und 5' bzw. 6 und 6' auf den Strahlteiler 4 gelenkt. Der Strahlteiler 4 fügt die beiden Detektionswellenfronten zu einer zusammen. Über den Strahlteiler 10 gelangt die Detektionswellenfront zur Linse 11. Die Detektionswellenfront wird in eine in der Lochblende 12 zusammenlaufende Kugelwellenfront verwandelt. Die beiden Detektionswellenfronten interferieren in der Ebene der Lochblende 12 miteinander und bilden den Objektpunkt der Objektebene 9 in die Ebene der Lochblende 12 mit vergrößerter Apertur im Sinne des doppelkonfokalen Mikroskops ab.

Die Anordnung ist im Sinne der Erfindung, wenn am Objekt und/oder am Lichtdetektor Interferenz der Beleuchtungs- oder Detektionsteilwellenfronten stattfindet. Deshalb ist es möglich, eine Detektionswellenfront bzw. eine Beleuchtungswellenfront wegzulassen.

Dazu wird entweder die obere oder die untere Beleuchtungswellenfront unterbrochen. Dies geschieht mit Hilfe eines opaken Hindernisses 45 bzw. 46 in der oberen bzw. unteren Beleuchtungswellenfront.
Mit Hilfe eines opaken Hindernisses 47 bzw. 48 in der oberen bzw. unteren Detektionswellenfront wird die obere bzw. untere Detektionswellenfront gestoppt. Hierdurch ist eine einseitige Detektion und eine Beleuchtung mit interferierenden Beleuchtungswellenfronten möglich.

Bei der in Figur 2 beschriebenen Ausführungsform ist die Strahlablenkeinheit so konzipiert, daß der Strahl eine Winkelbewegung bezüglich der optischen Achse durchführt, wobei vorzugsweise die Mitten der Eintrittspupillen 7' bzw. 8' der Objektive 7 bzw. 8 Drehpunkte sind. Aufeinander abgestimmte Ablenkeinheiten können auch zwischen dem Strahlteiler 4 und dem Objektiv 7 bzw. zwischen dem Strahlteiler 4 und dem Objektiv 8 eingefügt werden.

Die Veränderung des relativen Gangunterschieds der oberen und unteren Wellenfronten kann auch durch die schnelle Veränderung der Abmessungen der oberen und unteren Strahlengänge erfolgen, z. B. über eine simultane Bewegung von Umlenkeinheiten 5 und 5' oder der Farbteilerpaare 20 und 21 in Richtung der optischen Achse. Diese Bewegung kann z. B. mit Hilfe piezoelektrischer oder elektromechanischer Stellelemente erfolgen.
Die Frequenz der Veränderung des Gangunterschiedes durch die Kompensationsvorrichtung kann mit Hilfe einer interferometrischen Anordnung erfaßt werden. Das Signal kann als Taktgeber für die Sample-Elektronik (Lock-in, Boxcar-Integrator) benutzt werden.

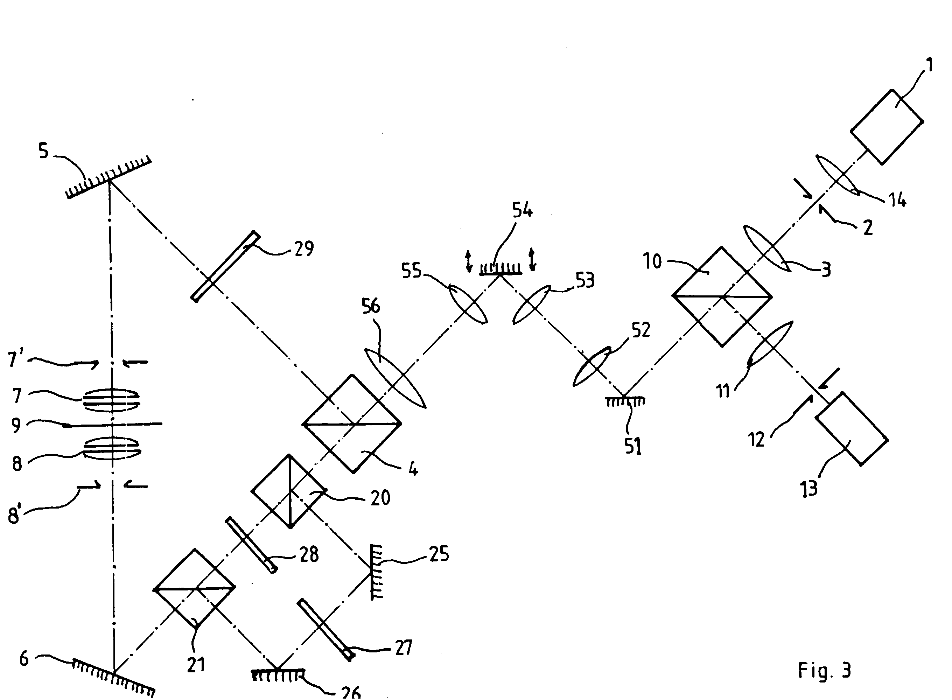

In Figur 3 ist die schematische Darstellung des Strahlenganges einer weiteren Ausführungsform eines Rastermikroskops dargestellt, wobei die Teile, die den in den Figuren 1 und 2 dargestellten Teilen entsprechen, mit gleichen Bezugszeichen versehen sind. Im folgenden sollen gemäß Figur 3 nur die Teile des Strahlengangs näher erläutert werden, die sich von den bisher beschriebenen Strahlengängen unterscheiden.

Zwischen dem Strahlteiler 10 und dem Strahlteiler 4 ist eine Strahlablenkeinheit angeordnet. Die aus der Lichtquelle 1 über die Lochblende 2 und die Linse 3 durch den Strahlteiler 10 kommende Wellenfront gelangt an den Spiegel 51, der um eine Achse (z. B. senkrecht zur Reflexionsebene) schnelle Kippbewegungen durchführt. Meistens ist der Spiegel an der Achse eines Drehspulgalvanometers angebracht, das mit Hilfe einer Sinusspannung betrieben wird. Auf diese Weise führt der Strahl nach dem Spiegel 51 eine Kippbewegung in der Reflexionsebene (= Papierebene) durch. Die Linsen 52 und 53 sind so angeordnet, daß der Spiegel 51 in den Spiegel 54 abgebildet wird. Der Spiegel 54 führt eine Kippbewegung durch, die senkrecht zu der des Spiegels 51 angeordnet ist. Die Linsen 55 und 56 bilden den Spiegel 54 und damit auch den Spiegel 51 in die Eintrittspupillen 7' und 8' der Objektive 7 und 8 ab. Der Strahl führt in den Eintrittspupillen 7' und 8' eine Drehbewegung in zwei zueinander senkrechte Richtungen durch. Die Drehpunkte befinden sich in den Eintrittspupillen 7'und 8'. Die Eintrittspupillen 7' und 8', der Spiegel 54 und 51 befinden sich in optisch zueinander konjugierten Ebenen.

Die Bewegungen der Spiegel 51 und 54 werden von den beiden Objektiven 7 und 8 des Mikroskops in der Objektebene 9 in zwei zueinander senkrechte lineare Bewegungen umgewandelt. Auf diese Weise kann das Objekt flächenmäßig abgerastert werden. Wenn man einen der beiden Spiegel auf einer zweiachsigen Mechanik anbringt, z. B. wenn man einen Galvanometerspiegel auf den anderen draufsetzt, so kann man auf einen Spiegel und zwei Linsen verzichten. Dies ist gut für die Ausbeute des detektierten Lichts. Man kann auch dann auf einen Spiegel verzichten, wenn eine Ablenkrichtung durch eine gleichwertige Tischbewegung in der Objektebene 9 ersetzt wird.

Um Interferenz zu gewährleisten, um die Interferenz kontrolliert durchführen zu können bzw. um konstruktive Interferenz zu gewährleisten, ist im Strahlengang zwischen dem Strahlenteiler 4 und dem Objektiv 8 mindestens eine Kompensationsvorrichtung 27 bzw. 28 zur Veränderung des Gangunterschieds zwischen den oberen und unteren Wellenfronten vorgesehen. Die Kompensation kann wahlweise auch durch die Bewegung bestimmter Bauteile, insbesondere der Umlenkelemente 25 und 26 durchgeführt werden. Die Kompensationsvorrichtung bzw. die optischen Wegstrecken sind so dimensioniert, daß ein hoher Kohärenzgrad zwischen den oberen und unteren Wellenfronten vorhanden ist, so daß Interferenz stattfinden kann. In Figur 3 ist im Strahlengang zwischen dem Strahlteiler 4 und dem Objektiv 7 die weitere Kompensationsvorrichtung 29 angeordnet.

Ein wesentlicher Unterschied zwischen dem konfokalen und dem hier beschriebenen doppelkonfokalen Mikroskop besteht darin, daß beim doppelkonfokalen Mikroskop entweder die Beleuchtungswellenfront aus Teilen besteht und von entgegengesetzten Richtungen der optischen Achse einfallen und miteinander interferieren, oder da die Detektionswellenfront aus Teilen besteht, die zunächst in entgegengesetzte Richtungen der optischen Achse vom Objekt weggehen und beim Lichtdetektor miteinander interferieren, oder daß beides zugleich zutrifft.

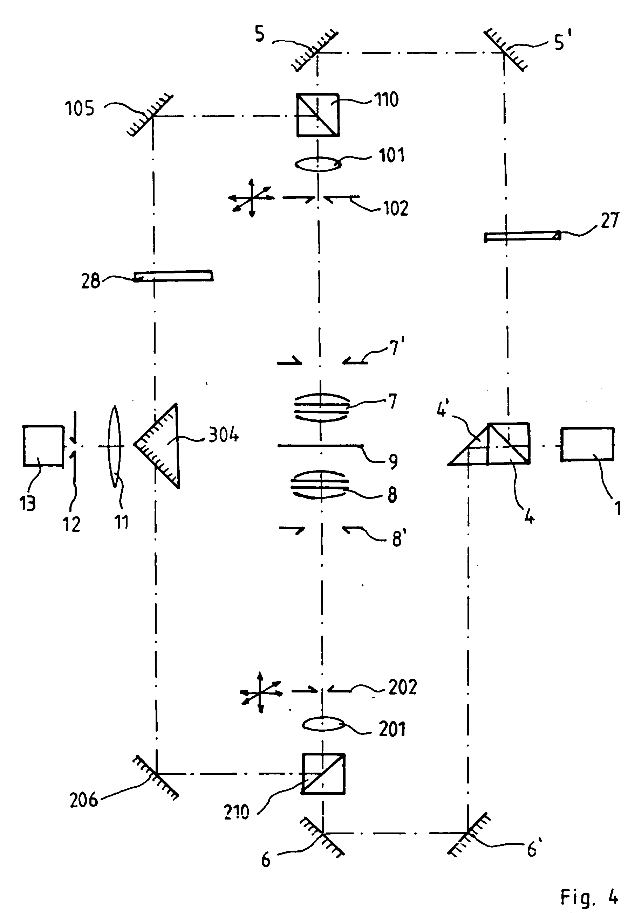

In Figur 4 ist der Strahlengang einer weiteren Ausführungsform eines Rastermikroskops schematisch dargestellt. Diese Anordnung unterscheidet sich von den bisher beschriebenen Ausführungsformen eines Rastermikroskops dadurch, daß die Aufspaltung der Wellenfront in eine obere und eine untere Beleuchtungswellenfront vor der Lochblende erfolgt. Aus diesem Grunde sind zwei Lochblenden 102 und 202 vorhanden, welche jeweils für die obere und die untere Wellenfront zuständig sind. Auch die Detektionswellenfronten werden erst nach dem Passieren der Lochblenden 102 und 202 zusammengeführt. Die Beleuchtungswellenfronten interferieren wie bisher im Objekt, die Detektionswellenfronten im Detektor 13.

Ein weiterer Unterschied zu den bisher beschriebenen Anordnungen besteht darin, daß die beiden Lochblenden 102 und 202 Translationsbewegungen durchführen können und so gegeneinander versetzt werden können.

Die übrigen Bauelemente erfüllen die gleiche Funktion wie bei den anderen Anordnungen.

Die Verschiebung der Lochblende 102 wird vorzugsweise zusammen mit der Linse 101 und/oder dem Spiegel 5 durchgeführt; die Verschiebung der Lochblende 202 wird analog zusammen mit der Linse 201 und/oder dem Spiegel 6 durchgeführt. Das Verschieben der Lochblenden 102 und 202 bewirkt eine gezielte Veränderung des lnterferenzmusters und damit eine etwas andere Art der Abbildung.

Alle Strahlteiler können wie bei den anderen Anordnungen auch ein geometrischer (z. B. eckiger Spiegel) oder physikalischer Wellenfrontteiler (z. B. Strahlteilerwürfel) sein, oder aus mehreren, eventuell auch selbständig optisch wirksamen Teilen bestehen. Im Falle von Fluoreszenzmikroskopie kann der Strahlteiler 110 und/oder 210 ein Farbteiler sein.
Der Strahlteiler 4 dient der Aufteilung der vom Laser kommenden Wellenfront in eine obere und eine untere Beleuchtungswellenfront. Das Prisma 4' dient der Umlenkung der unteren Beleuchtungswellenfront hin zu dem Umlenkelement 6'. Von dort gelangt diese über das Umlenkelement 6 und den Strahlteilerwürfel 210 zur Linse 201. Die obere Beleuchtungswellenfront gelangt über die Kompensationsvorrichtung 27, über die Umlenkelemente 5' und 5 und anschließend über den Strahlteilerwürfel 110 zur Linse 101. Die ohere Detektionswellenfront gelangt über die Lochblende 102 und die Linse 101 zum Strahlteiler 110, von wo sie über die Umlenkelemente 105 (z. B. Spiegel oder Prisma) zur Kompensationsvordchtung 28, und von dort zum Strahlteiler 304 gelangt, wo sie mit der unteren Detektionswellenfront vereinigt wird.
Die untere Detektionswellenfront gelangt über den Strahlteiler 210 und das Umlenkelement 206 zum Strahlenteiler 304. Die vereinigte Wellenfront gelangt über die Linse 11 zur Lochblende 12.

In dieser Anordnung kann, wie in allen anderen Anordnungen auch, der Strahlteiler 4 sowohl ein physikalischer als auch ein geometrischer Strahlteiler sein, oder auch aus mehreren optisch wirksamen Teilen zusammengesetzt sein. Dies gilt auch für den Strahlteiler 304, der auch durch eine Kombination, wie sie aus 4 und 4' gebildet wird, ersetzbar ist.

## Patentansprüche

1. Rastermikroskop mit mindestens einer punktförmigen Lichtquelle (1), mindestens einem Lichtdetektor (13) und mindestens zwei Objektiven (7, 8), wobei sich auf verschiedenen Seiten der Objektebene (9) mindestens ein Objektiv (7, 8) befindet, das gegen mindestens ein Objektiv, das sich auf der anderen Seite der Objektebene befindet, gerichtet ist und mit diesem einen gemeinsamen Fokus hat,
dadurch gekennzeichnet,
daß mindestens eine nichtpolarisierende Strahlteilervorrichtung (4, 304) zur Aufspaltung des beleuchtenden Lichts in kohärente Anteile, die die verschiedenen gegeneinander gerichteten Objektive beleuchten, und/oder zum Zusammenführen von zueinander kohärenten Lichtstrahlen von den verschiedenen, gegeneinander gerichteten Objektiven vorgesehen ist und so angeordnet ist, daß der Gangunterschied der durch die Strahlteilervorrichtung (4, 304) definierten, von mindestens einer Lichtquelle durch die verschiedene, gegeneinander gerichtete Objektive zu deren gemeinsamen Fokus führenden optischen Wege kleiner ist als die Kohärenzlänge des aus dieser Lichtquelle kommenden Lichts und/oder der Gangunterschied der durch die Strahlteilervorrichtung (4, 304) definierten, von dem gemeinsamen Fokus durch die verschiedenen Objektive zu mindestens einem gemeinsamen Detektor führenden optischen Wege kleiner ist als die Kohärenzlänge des vom gemeinsamen Fokus stammenden Lichts, und
daß mindestens ein Interferenzveränderungsmittel derart angeordnet ist, daß Licht, das durch mindestens eines der Objektive (7) hindurchgegangen ist, kohärent oder teilkohärent überlagert wird mit Licht, das durch mindestens ein Objektiv (8) hindurchgegangen ist, welches sich auf der anderen Seite der Objektebene (9) befindet, so daß die überlagerten Lichtwellen am Objekt und/oder an mindestens einem Lichtdetektor (13) zumindest zeitweise miteinander interferieren und daß eine gezielte Beeinflussung der Interferenz möglich ist.

2. Rastermikroskop nach Anspruch 1,
dadurch gekennzeichnet,
daß an mindestens einem abzubildenden Objektpunkt und/oder an mindestens einem Lichtdetektor zumindest zeitweise konstruktive Interferenz auftritt.

3. Rastermikroskop nach Anspruch 1 oder 2,
dadurch gekennzeichnet,
daß die zwei Objektive (7, 8), die auf verschiedenen Seiten der Objektebene (9) angeordnet sind, gegeneinander gerichtet und zur optischen Achse und zueinander zentriert sind.

4. Rastermikroskop nach Anspruch 1, 2 oder 3,
dadurch gekennzeichnet,
daß sich in mindestens einer Ebene, die zur Objektebene optisch konjugiert ist, mindestens eine Blende (12, 2) befindet.

5. Rastermikroskop nach mindestens einem der vorherigen Ansprüche,
dadurch gekennzeichnet,
daß das Interferenzveränderungsmittel eine Kompensationsvorrichtung (15, 27, 28, 29) ist, die an mindestens einem abzubildenden Objektpunkt und/oder an mindestens einem Lichtdetektor eine Überlagerung kohärenter oder teilkohärenter Wellenzüge ermöglicht, die jeweils durch die verschiedenen Objektive (7, 8) ganz oder teilweise getreten sind.

6. Rastermikroskop nach Anspruch 5,
dadurch gekennzeichnet,
daß die Kompensationsvorrichtung (15, 27, 28, 29) an mindestens einem abzubildenden Objektpunkt und/ oder an mindestens einem Lichtdetektor (13) zumindest zeitweise konstruktive Interferenz der Wellenzüge hervorruft.

7. Rastermikroskop nach Anspruch 5 oder 6,
dadurch gekennzeichnet,
daß mindestens eine der Kompensationsvorrichtungen (15, 27, 28, 29) als gangunterschiedveränderndes Element eine zumindest teilweise transparente Platte besitzt, die unterschiedliche optische Dicken aufweist und so bewegt wird, daß in einer zeitlichen Abfolge unterschiedliche optisch dicke Teile der Platte in den Strahlengang gebracht werden.

8. Rastermikroskop nach Anspruch 5 oder folgende,
dadurch gekennzeichnet,
daß mindestens eine der Kompensationsvorrichtungen eine mechanische Translationsvorrichtung ist, die an mindestens einem optisch wirksamen Teil angebracht ist und den optischen Weg verlängert oder verkürzt.

9. Rastermikroskop nach mindestens einem der vorherigen Ansprüche,
dadurch gekennzeichnet,
daß mindestens eines der Interferenzveränderungsmittel eine Translationsbewegung der Objektive bewirkt, so daß die Translationsbewegung eine nicht verschwindende Komponente in Ausbreitungsrichtung der sie passierenden Wellenfront besitzt, wobei sich die Objektive und die Probe zusammen bewegen.

10. Rastermikroskop nach mindestens einem der vorherigen Ansprüche,
dadurch gekennzeichnet,
daß die Interferenzveränderungsmittel die Interferenzen schnell oder auch langsam verändern.

11. Rastermikroskop nach mindestens einem der vorherigen Ansprüche,
dadurch gekennzeichnet,
daß die Veränderung der Interferenzen periodisch durchgeführt wird, da die Kompensationsvorrichtung den Gangunterschied zwischen den Wellen zügen, die durch das eine Objektiv hindurchgehen oder hindurchgegangen sind, und den Wellenzügen, die durch das andere Objektiv hindurchgehen oder hindurchgegangen sind, periodisch verändert, oder daß die Objektive eine periodische Bewegung durchführen.

12. Rastermikroskop nach mindestens einem der vorherigen Ansprüche,
dadurch gekennzeichnet,
daß mindestens eines der Interferenzveränderungsmittel mit der Steuer- und/oder Regelelektronik der Rasterung und/oder mit der Signalverarbeitungselek tronik ihrer Funktion rückgekoppelt und/oder abgestimmt ist.

13. Rastermikroskop nach mindestens einem der vorherigen Ansprüche,
dadurch gekennzeichnet,
daß dem Lichtdetektor (13) eine Sample-Elektronik, z.B. Lock-in, Boxcar-Integrator o.ä., nachgeschaltet ist, die den Sample-Takt selbst erzeugt, oder daß dem Lichtdetektor (13) eine Sample-Elektronik, z.B. Lock-In, Boxcar-Integrator o.ä., nachgeschaltet ist, deren Sample-Takt aus einer Elektronik stammt, welche die Interferenzveränderungsmittel steuern oder regeln, oder daß dem Lichtdetektor (13) eine Sample-Elektronik, z.B. Lock-in, Boxcar-Integrator o.ä., nachgeschaltet ist, die den Sample-Takt aus einem weiteren Lichtdetektor bezieht, der den Interferenzveränderungsmitteln optisch nachgeschaltet ist und der interferierendes Licht detektiert, dessen Interferenzen sich aufgrund der Einwirkung des Interferenzveränderungsmittels von konstruktiv auf destruktiv und umgekehrt verändern.

14. Rastermikroskop nach mindestens einem der vorherigen Ansprüche,
dadurch gekennzeichnet,
daß mindestens eine Vorrichtung zur Veränderung der Amplitude in den Beleuchtungs- und/oder den Detektionsstrahlengängen vorgesehen ist.

15. Rastermikroskop nach mindestens einem der vorherigen Ansprüche,
dadurch gekennzeichnet,
daß mindestens eine Vorrichtung vorhanden ist, welche Wellenfrontaberrationen, die insbesondere durch Deckgläser oder Probe entstehen, zumindest teilweise kompensieren.

16. Rastermikroskop nach mindestens einem der vorherigen Ansprüche,
dadurch gekennzeichnet,
daß die zur Objektebene optisch konjugierten Blenden entfernbar und/oder austauschbar und/oder in ihrer Öffnung variabel und/oder beweglich, d. h. Translation und/oder Rotation sind.

17. Rastermikroskop nach mindestens einem der vorherigen Ansprüche,
dadurch gekennzeichnet,
daß zusätzlich optische Elemente mit mindestens einem Lichtdetektor angeordnet sind, insbesondere um zusätzlich zum doppelkonfokalen Bild, ein Bild mit konventioneller oder herkömmlich konfokaler Auflösung zu erhalten.

## Claims

1. Scanning microscope with at least one point source of light (1), at least one light sensor (13) and at least two lenses (7, 8), wherein on different sides of the object plane (9) at least one lens (7, 8) is located which is opposite at least one lens which is located on the other side of the object plane, and has a common focus with said lens, characterised in that at least one non-polarising beam-splitting device (4, 304) for splitting the illuminating light into coherent parts which illuminate the different, oppositely disposed lenses, and/or for bringing together light beams which are coherent to each other from the different, oppositely disposed lenses is provided and is arranged so that the path difference of the optical path defined by the beam-splitting device (4, 304) leading from at least one light source through the different, oppositely disposed lenses to the common focus thereof is smaller than the coherence length of the light coming from this light source and/or the path difference of the optical path defined by the beam-splitting device (4, 304) leading from the common focus through the different lenses to at least one common sensor is smaller than the coherence length of the light emanating from the common focus, and in that at least one interference altering means is arranged such that light which has passed through at least one of the lenses (7) is superimposed coherently or partly coherently onto light which has passed through at least one lens (8) which is located on the other side of the object plane (9) so that the superimposed light waves at least intermittently interfere with each other at the object and/or at at least one light sensor (13), and that specific influencing of the interference is possible.

2. Scanning microscope according to claim 1, characterised in that at least intermittent constructive interference occurs at at least one object point to be imaged and/or at at least one light sensor.

3. Scanning microscope according to claim 1 or 2, characterised in that the two lenses (7, 8) which are arranged on different sides of the object plane (9) are oppositely disposed and are centred with respect to the optical axis and to one another.

4. Scanning microscope according to claim 1, 2 or 3, characterised in that at least one screen (12, 2) is located on at least one plane which is optically conjugated with respect to the object plane.

5. Scanning microscope according to at least one of the preceding claims, characterised in that the interference altering means is a compensating device (15, 27, 28, 29) which makes it possible to superimpose coherent or part coherent wave trains which have in each case wholly or partly passed through the different lenses (7, 8) at an object point to be imaged and/or at at least one light sensor.

6. Scanning microscope according to claim 5, characterised in that the compensating device (15, 27, 28, 29) causes at least intermittent constructive interference of the wave train at at least one object point to be imaged and/or at at least one light sensor (13).

7. Scanning microscope according to claim 5 or 6, characterised in that at least one of the compensating devices (15, 27, 28, 29) has as its path difference altering element an at least partially transparent plate which is provided with different optical thicknesses and is moved such that parts of the plate with different optical thicknesses are brought in sequence into the beam path.

8. Scanning microscope according to claim 5 or following, characterised in that at least one of the compensating devices is a mechanical translation device which is fitted to at least one optically effective part and lengthens or shortens the optical path.

9. Scanning microscope according to at least one of the preceding claims, characterised in that at least one of the interference altering means effects a translatory movement of the lens, so that the translatory movement has a non-vanishing component in the direction of propagation of the wave front passing before it, wherein the lens and the sample move together.

10. Scanning microscope according to at least one of the preceding claims characterised in that the interference altering means alters the interferences quickly or slowly.

11. Scanning microscope according to at least one of the preceding claims, characterised in that the alteration of the interferences is carried out periodically as the compensating device periodically alters the path difference between the wave trains which are passing through or have passed through one lens and the wave trains which are passing through or have passed through the other lens, or in that the lenses carry out a periodic movement.

12. Scanning microscope according to at least one of the preceding claims, characterised in that at least one of the interference altering means is fed back and/or tuned to the function of the control electronics and/or regulating electronics for the scanning and/or the signal processing electronics.

13. Scanning microscope according to at least one of the preceding claims, characterised in that sampling electronics, for example lock-in, boxcar integrator or the like, which themselves produce the sampling rate, are connected after the light sensor (13), or that sampling electronics, for example lock-in, boxcar integrator or the like, the sampling rate of which is derived from electronics which control or regulate the interference altering means, are connected after the light sensor (13), or that sampling electronics, for example lock-in, boxcar integrator or the like, which adopt the sampling rate from a further light sensor which is optically connected after the interference altering means and senses the interfering light, the interferences of which alter from constructive to destructive and vice-versa due to the effect of the interference altering means, are connected after the light sensor (13).

14. Scanning microscope according to at least one of the preceding claims, characterised in that at least one device for altering the amplitude in the illumination and/or sensing wave paths is provided.

15. Scanning microscope according to at least one of the preceding claims, characterised in that at least one device is present which at least partially compensates for wave front abberations which are caused in particular by cover slips or samples.

16. Scanning microscope according to at least one of the preceding claims, characterised in that the screens optically conjugated to the object plane are removable and/or replaceable and/or variable in their degree of opening and/or moveable, that is to say in both translation and rotation.

17. Scanning microscope according to at least one of the preceding claims, characterised in that additional optical elements are arranged with at least one light sensor, in particular to obtain an image with conventional or standard confocal resolution in addition to the double-confocal image.

## Revendications

1. Microscope à balayage comprenant au moins une source lumineuse ponctuelle (1), au moins un détecteur de lumière (13) et au moins deux objectifs (7, 8), au moins un objectif (7, 8) se trouvant sur des côtés différents du plan (9) objet et étant orienté sur au moins un objectif se trouvant de l'autre côté du plan objet en ayant un foyer commun avec lui,
caractérisé
en ce qu'au moins un dispositif non polarisant de division du rayon (4, 304), qui est destiné à diviser la lumière d'éclairage en fractions cohérentes qui éclairent les différents objectifs orientés les uns vers les autres et/ou à concentrer les uns avec les autres les rayons lumineux cohérents provenant des différents objectifs orientés les uns vers les autres, est prévu et est disposé de manière que la différence de marche des trajets optiques qui sont définis par le dispositif de division de rayon (4, 304) et mènent d'au moins une source lumineuse et par les différents objectifs orientés les uns vers les autres vers leur foyer commun soit plus petite que la longueur de cohérence de la lumière provenant de cette source lumineuse et/ou de manière que la différence de marche des trajets optiques définis par le dispositif diviseur de rayon (4, 304) menant du foyer commun et par les différents objectifs à au moins un détecteur commun soit plus petite que la longueur de cohérence de la lumière issue du foyer commun et
en ce qu'au moins un moyen de modification d'interférence est disposé de manière que la lumière qui a passé par au moins l'un des objectifs (7) soit superposée de manière cohérente ou partiellement cohérente à la lumière qui a passé par au moins un objectif (8) qui se trouve de l'autre côté du plan (9) objet, de manière que les ondes lumineuses superposées interfèrent les unes avec les autres au moins partiellement sur l'objet et/ou au moins sur un détecteur de lumière (13) et qu'une influence spécifique sur l'interférence soit possible.

2. Microscope à balayage selon la revendication 1,
caractérisé
en ce qu'une interférence constructive au moins momentanée apparaît sur au moins un point objet dont l'image doit être reproduite et/ou sur au moins un détecteur de lumière.

3. Microscope à balayage selon la revendication 1 ou 2,
caractérisé
en ce que les deux objectifs (7, 8) qui sont disposés sur des côtés différents du plan objet (9) sont orientés l'un vers l'autre et sont centrés sur l'axe optique et l'un sur l'autre.

4. Microscope à balayage selon la revendication 1, 2 ou 3,
caractérisé
en ce qu'au moins un diaphragme (12, 2) se trouve dans au moins un plan qui est conjugué optiquement avec le plan objet.

5. Microscope à balayage selon au moins l'un des revendications précédentes,
caractérisé
en ce que le moyen de modification d'interférence est un dispositif de compensation (15, 27, 28, 29) qui permet en au moins un point objet dont l'image doit être reproduite et/ou sur au moins un détecteur de lumière une superposition de trains d'ondes cohérents ou partiellement cohérents dont chacun a passé totalement ou partiellement par les différents objectifs (7, 8).

6. Microscope à balayage selon la revendication 5,
caractérisé
en ce que le dispositif de compensation (15, 27, 28, 29) provoque sur au moins un point objet dont l'image doit être reproduite et/ou sur au moins un détecteur de lumière (13) une interférence au moins momentanément constructive des trains d'ondes.

7. Microscope à balayage selon la revendication 5 ou 6,
caractérisé
en ce qu'au moins l'un des dispositifs de compensation (15, 27, 28, 29) ayant la forme d'un élément modifiant la différence de marche comprend une plaque au moins partiellement transparente qui a des épaisseurs optiques différentes et qui est déplacée de manière que des parties d'épaisseurs optiques différentes de la plaque soient amenées dans la marche du rayon en une séquence dans le temps.

8. Microscope à balayage selon la revendication 5 ou les suivantes,
caractérisé
en ce qu'au moins l'un des dispositifs de compensation est un dispositif mécanique de translation qui est monté sur au moins un élément ayant une activité optique et qui allonge ou raccourcit le trajet optique.

9. Microscope à balayage selon au moins l'une des revendications précédentes,
caractérisé
en ce qu'au moins l'un des moyens de modification d'interférence provoque un mouvement de translation des objectifs de manière que le mouvement de translation comporte une composante qui ne disparaît pas dans la direction de propagation du front d'ondes passant par eux, les objectifs et l'échantillon se déplaçant ensemble.

10. Microscope à balayage selon au moins l'une des revendications précédentes,
caractérisé
en ce que les moyens de modification d'interférence modifient les interférences rapidement ou aussi lentement.

11. Microscope à balayage selon au moins l'une des revendications précédentes,
caractérisé
en ce que la modification des interférences est effectuée périodiquement, en ce que le dispositif de compensation modifie périodiquement la différence de marche entre les trains d'ondes qui passent ou qui ont passé par l'un des objectifs et les trains d'ondes qui passent ou ont passé par l'autre objectif ou en ce que les objectifs exécutent un mouvement périodique.

12. Microscope à balayage selon au moins l'une des revendications précédentes,
caractérisé
en ce qu'au moins l'un des moyens de modification d'interférence est rétroactif et/ou accordé avec l'électronique de commande et/ou de réglage du balayage et/ou avec l'électronique de traitement des signaux de sa fonction.

13. Microscope à balayage selon au moins l'une des revendications précédentes,
caractérisé
en ce qu'une électronique d'échantillonnage, par exemple un intégrateur de verrouillage de type Boxcar ou analogue, qui est montée en aval du détecteur de lumière (13), génère automatiquement la cadence d'échantillonnage ou en ce qu'une électronique d'échantillonnage, par exemple un intégrateur de verrouillage de type Boxcar ou analogue est montée en aval du détecteur de lumière (13), sa cadence d'échantillonnage provenant d'une électronique qui commande ou règle le moyen de modification d'interférence, ou en ce qu'une électronique d'échantillonnage, par exemple un intégrateur de verrouillage de type Boxcar ou analogue, qui est montée en aval du détecteur de lumière (13), reçoit la cadence d'échantillonnage d'un autre détecteur de lumière qui est monté optiquement en aval des moyens de modification d'interférence et qui détecte la lumière interférente dont les interférences varient du mode constructif au mode destructif et inversement par suite de l'action du moyen de modification d'interférence.

14. Microscope à balayage selon au moins l'une des revendications précédentes,
caractérisé
en ce qu'au moins un dispositif de modification de l'amplitude est prévu dans les marches des rayons d'éclairage et/ou des rayons de détection.

15. Microscope à balayage selon au moins l'une des revendications précédentes,
caractérisé
en ce qu'il comporte au moins un dispositif qui compense au moins partiellement les aberrations des fronts d'ondes qui sont dues en particulier aux lamelles couvre-objet ou à l'échantillon.

16. Microscope à balayage selon au moins l'une des revendications précédentes,
caractérisé
en ce que les diaphragmes conjugués optiquement avec le plan objet peuvent être enlevés et/ou interchangés et/ou leur ouverture est variable et/ou mobile, c'est à dire en translation et/ou en rotation.

17. Microscope à balayage selon au moins l'une des revendications précédentes,
caractérisé
en ce que des éléments optiques comprenant au moins un détecteur de lumière sont disposés accessoirement, en particulier pour obtenir, en plus de l'image double confocale, une image ayant une résolution usuelle ou confocale habituelle.
